# EUROPÄISCHE PATENTSCHRIFT

(11) **EP 3 473 848 B1**
(45) Veröffentlichungstag und Bekanntmachung des Hinweises auf die Patenterteilung: **07.09.2022**
(21) Anmeldenummer: 17197490.0
(22) Anmeldetag: 20.10.2017
(51) Int. Cl.: F03D 1/04

(54) **STRÖMUNGSENERGIEANLAGE, INSBESONDERE MANTELWINDTURBINE**
FLOW ENERGY INSTALLATION, IN PARTICULAR A WIND TURBINE WITH A JACKET
INSTALLATION D'ENERGIE D'ECOULEMENT, EN PARTICULIER TURBINE ÉOLIENNE À GAINE

(43) Veröffentlichungstag der Anmeldung: 24.04.2019
(73) Patentinhaber: FlowGen Development & Management AG, 6300 Zug (CH)
(72) Erfinder: Küster, Dirk, 8121 Benglen (CH)
(74) Vertreter: Schaad, Balass, Menzl & Partner AG

(56) Entgegenhaltungen:
- WO-A1-2014/136032
- DE-A1-102011 016 141

## Beschreibung

Die vorliegende Erfindung betrifft eine Strömungsenergieanlage, insbesondere eine Mantelwindturbine, mit den Merkmalen des Oberbegriffs des Anspruchs 1.

Eine Mantelwindturbine dieser Art ist aus WO 2014/136032 A1 bekannt. Sie weist einen zu einer Längsachse rotationssymmetrischen, ringförmigen Mantel auf, dessen radial innenliegende Oberseite einen Strömungskanal für ein Fluid begrenzt. Eine Leitelementprofilnase eines zur Längsachse rotationssymmetrischen, ringförmigen Leitelements, dessen grösster Aussendurchmesser kleiner ist als die kleinste lichte Weite des Strömungskanals, befindet sich stromaufwärts bezüglich der Profilnase des Mantels und eine Leitelementprofilhinterkante befindet sich, in Strömungsrichtung des Fluids, bei der Profilnase des Mantels. Ein im Strömungskanal angeordneter, um die Längsachse drehbarer, vom Fluid angeströmter Propeller befindet sich bei der kleinsten lichten Weite des Strömungskanals, wobei zwischen Spitzen des Rotors und dem Mantel nur ein kleiner Spielraum vorhanden ist.

Eine weitere Mantelwindturbine ist beispielsweise aus dem Dokument US 2010/0068052 A1 bekannt. Sie weist einen von einer Turbinenverkleidung umgebenen Impeller und eine Ejektorverkleidung auf, wobei die Turbinenverkleidung und/oder die Ejektorverkleidung aufblasbare Abschnitte und/oder flexible, aufblasbare Bereiche aufweisen. Die Turbinenverkleidung und/oder die Ejektorverkleidung können interne Rippen haben, deren Form und Länge veränderbar sind, um die Charakteristik der Mantelwindturbine zu ändern.

Eine weitere Mantelwindturbine ist aus dem Dokument US 2009/0087308 A2 bekannt. Sie weist eine aerodynamisch geformte Turbinenverkleidung mit einem Einlass, einen Ring von Statorflügeln, einen Impeller aus einem Ring von rotierenden Schaufeln in Linie mit den Statorflügeln, und eine Mischer-/Ejektorpumpe auf, um den Luftdurchsatz durch die Turbine zu steigern durch schnelles Mischen der die Turbine verlassenden Strömung mit der hochenergetischen Bypass-Windströmung.

Weiter ist in Dokument DE 30 49 791 A1 auch eine Mantelwindturbine offenbart.

Es ist eine Aufgabe der vorliegenden Erfindung eine Strömungsenergieanlage, insbesondere eine Mantelwindturbine, mit einem guten Wirkungsgrad bei einem einfachen Aufbau zu schaffen.

Diese Aufgabe wird mit einer Strömungsenergieanlage beziehungsweise Mantelwindturbine gemäss Anspruch 1 gelöst.

Die Strömungsenergieanlage, welche insbesondere als Mantelwindturbine dient, weist einen zu einer Längsachse wenigstens annähernd rotationsymmetrischen, ringförmigen, vorzugsweise in sich geschlossenen Mantel mit dem Querschnitt eines Flügelprofils auf. Bevorzugt ist der Mantel starr und somit unveränderlich.

Der eine Verschalung der Strömungsenergieanlage, insbesondere Mantelturbine bildende Mantel begrenzt mit seiner bezüglich der Längsachse radial innen liegenden Oberseite einen Strömungskanal für ein die Strömungsenergieanlage antreibendes Fluid. Beim Einsatz der Strömungsenergieanlage als Mantelwindturbine bildet die bei Wind bewegte Luft das Fluid.

Weiter weist die Strömungsenergieanlage, insbesondere Mantelwindturbine, ein zur Längsachse wenigstens annähernd rotationssymmetrisches, ringförmiges, vorzugsweise in sich geschlossenes Leitelement auf, dessen grösster Aussendurchmesser kleiner ist als die kleinste lichte Weite des Strömungskanals. Das stromaufwärts liegende Ende des Leitelements, das heisst die Leitelementprofilnase, ist bezüglich der Profilnase des Mantels in Strömungsrichtung des Fluids stromaufwärts angeordnet, wobei das stromabwärts liegende Ende des Leitelements, das heisst die Leitelementprofilhinterkante, bezüglich der Profilnase des Mantels stromabwärts und bezüglich der kleinsten lichten Weite des Strömungskanals stromaufwärts angeordnet ist. Das Leitelement befindet sich somit teilweise im Strömungskanal und teilweise stromaufwärts ausserhalb des Strömungskanals.

Weiter weist die Strömungsenergieanlage, insbesondere Mantelwindturbine, einen um die Längsachse drehbaren Propeller auf, welcher vom Fluid beziehungsweise dem Wind angeströmt wird und einen elektrischen Generator zur Erzeugung elektrischer Energie antreibt.

Der Propeller befindet sich, in Strömungsrichtung gesehen, wenigstens annähernd bei der Leitelementprofilhinterkante, bevorzugt in einem stromabwärts liegenden Endabschnitt des Leitelements, welcher sich, in Richtung der Längsachse und ab der Leitelementprofilhinterkante gemessen, über einen Viertel, bevorzugt über eine Fünftel der Länge des Leitelements erstreckt.

In radialer Richtung gesehen reicht der Propeller bis auf einen Spalt zum Leitelement. Der Durchmesser des Propellers ist somit bevorzugt wenigstens annähernd gleich gross wie die lichte Weite des Leitelements.

Weiter ist es möglich, dass sich der Propeller bezüglich der Leitelementprofilhinterkante stromabwärts befindet, jedoch stromaufwärts der kleinsten lichten Weite des Strömungskanals.

In diesem Zusammenhang sei erwähnt, dass bevorzugt ein Antriebsorgan vorhanden ist, welches die axiale Position des Propellers einstellt. Diese Ausführungsform erlaubt eine optimale Anpassung an unterschiedliche Windverhältnisse.

Ist der Propeller , laut einer nicht erfindungsgemäßen Ausführungsform, stromabwärts des Leitelements angeordnet, ist sein Durchmesser bevorzugt wenigstens annähernd gleich gross wie die lichte Weite des Leitelements. Er kann bei dieser Anordnung jedoch grösser gewählt werden, um auch von Mantelstrom beaufschlagt zu sein.

Bei der erfindungsgemässen Strömungsenergieanlage, insbesondere Mantelwindturbine, wird zwischen dem Mantel und dem Leitelement ein Mantelstrom erzeugt, welcher infolge des Flügelprofils des Mantels bei der kleinsten lichten Weite des Strömungskanals einen Unterdruck erzeugt und somit den den Propeller beaufschlagenden Hauptstrom, welcher den vom Leitelement gebildeten Hauptstromkanal durchströmt, beschleunigt. Dies führt zu einem guten Wirkungsgrad.

Bevorzugt stehen vom Mantel wenigstens annähernd in radialer Richtung gegen innen Träger ab, welche ein Generatorgehäuse tragen. Dieses weist bevorzugt einen wenigstens annähernd tropfenförmigen, zur Längsachse wenigstens annähernd rotationssymmetrischen Längsschnitt auf. Im Generatorgehäuse, bevorzugt in dessen mit den Trägern fest verbundenen stationären Teil, ist der Generator angeordnet. Bevorzugt ragt eine den Propeller tragende Welle, welche mit dem Generator verbunden ist, entgegen der Strömungsrichtung über den stationären Teil des Generatorgehäuses vor, wobei eine auf der Welle sitzende Nasenhaube einen mit der Welle und somit dem Propeller mitdrehenden Teil des Generatorgehäuses bildet. Diese Ausführungsform hilft weiter den Widerstand zu minimieren, um optimale Strömungsbedingungen zu erzeugen. Bevorzugt verlaufen die Träger mit einem an den Mantel anschliessenden Aussenabschnitt annähernd rechtwinklig zur Längsrichtung und geradlinig. Bevorzugt weisen die Träger zwischen dem Aussenabschnitt und dem Generatorgehäuse einen wenigstens annähernd S-förmig gebogenen Innenabschnitt auf. Bevorzugt weisen die Träger anschliessend an den Aussenabschnitt eine erste Krümmung entgegen der Strömungsrichtung und benachbart zum Generatorgehäuse eine entgegengesetzte zweite Krümmung auf, sodass das radial innen liegende Ende der Träger wiederum wenigstens annähernd rechtwinklig zur Längsachse verläuft. Bevorzugt verlaufen die Träger zwischen den beiden Krümmungen geradlinig mit beispielsweise einem Winkel von wenigstens annähernd 45° zur Längsachse.

Weiter weisen die Träger bevorzugt ein symmetrisches Profil, insbesondere ein symmetrisches Flügelprofil auf, um wiederum den Strömungswiderstand klein zu halten.

Bevorzugt ist das Leitelement durch Elementträger getragen, welche von den Trägern entgegen der Strömungsrichtung abstehen. Bevorzugt sind diese Elementträger geradlinig ausgebildet und wenigstens annähernd parallel zur Längsachse ausgerichtet. Sie verlaufen somit in Strömungsrichtung, was den Widerstand minimal hält.

In Richtung der Längsachse gemessen beträgt die Länge des Leitelements bevorzugt 15% bis 30% der in Richtung der Längsachse gemessenen Länge des Mantels. Besonders bevorzugt liegt die Länge des Leitelements wenigstens annähernd bei 22 bis 24% der Länge des Mantels.

In Richtung der Längsachse gemessen steht das Leitelement mit 30% bis 50% seiner Länge entgegen der Strömungsrichtung über den Mantel, das heisst, bezüglich der Profilnase des Mantels, vor. Besonders bevorzugt beträgt dieser Vorstand wenigstens annähernd 40%. Folglich befinden sich bevorzugt 50% bis 70%, besonders bevorzugt wenigstens annähernd 60% der Länge des Leitelements im vom Mantel gebildeten Strömungskanal.

Der Aussendurchmesser des Leitelements beträgt bevorzugt 85% bis 96% der lichten Weite des Strömungskanals, insbesondere wenigstens annährend 92%. Dies führt zu einer optimalen Aufteilung zwischen Mantelstrom und Hauptstrom.

Bezüglich der kleinsten lichten Weite des Strömungskanals ist das Leitelement entgegen der Strömungsrichtung stromaufwärts versetzt. Bevorzugt trägt der Abstand zwischen dem Leitelement beziehungsweise der Leitelementprofilhinterkante und der kleinsten lichten Weite des Strömungskanals 20% bis 30% der Länge des Mantels. Besonders bevorzugt beträgt dieser Abstand wenigstens annähernd 23 bis 25%.

Aufwendige Simulationen und Versuche haben gezeigt, dass die oben genannten Verhältnisse zu einem optimalen Wirkungsgrad führen.

Bevorzugt ist das Flügelprofil des Mantels bikonvex ausgebildet, das heisst, dass sowohl die radial innenliegende Oberseite als auch die radial aussenliegende Unterseite des Flügelprofils konvex gebogen ist. Um mit dem Mantelstrom einen optimalen Unterdruck zu erzeugen, verläuft die Skelettlinie bezüglich der Profilsehne, d.h. der geradlinigen Verbindung zwischen der Profilnase und Profilhinterkante, bevorzugt auf der radial innen liegenden Seite. Die Skelettlinie ist durch die Mittelpunkte der grösst möglichen Kreise im Flügelprofil gebildet.

Bevorzugt verläuft die Profilsehne wenigstens annähernd parallel zur Längsachse oder sie schliesst mit einer stromabwärtsseitigen geradlinigen Verlängerung mit der Längsachse einen spitzen Winkel ein. Dieser ist bevorzugt kleiner als 5°. Auch durch diese Massnahme werden optimale Strömungsverhältnisse gefördert.

Es sei jedoch erwähnt, dass die Profilsehne sich in stromabwärts zeigender Richtung von der Längsachse weiter entfernen kann, um den Auslass zu vergrössern. In diesem Fall schliesst die Profilsehne mit einer stromaufwärtsseitigen geradlinigen Verlängerung mit der Längsachse einen spitzen Winkel ein, welcher bevorzugt kleiner als 10°, insbesondere kleiner als 5° ist.

Bevorzugt beträgt die Profilwölbung 0.06 bis 0.08, insbesondere wenigstens annähernd 0.07. Unter Profilwölbung ist die grösste Abweichung der Skelettlinie von der Profilsehne zu verstehen, wobei diese grösste Abweichung dividiert durch die Länge der Profilsehne gebildet ist.

Die Profildicke beträgt bevorzugt 0.19 bis 0.3, insbesondere wenigstens annähernd 0.22 bis 0.24, insbesondere 0.23. Unter Profildicke ist der grösst mögliche Kreisdurchmesser auf der Skelettlinie zwischen der Profiloberseite und der Profilunterseite zu verstehen. Sie wird durch das Verhältnis dieses grösst möglichen Kreisdurchmessers durch die Länge der Profilsehne angegeben.

Die Wölbungsrücklage beträgt bevorzugt 0.3 bis 0.45, insbesondere wenigstens annähernd 0.36 bis 0.38. Die Wölbungsrücklage bezeichnet den Abstand von der Profilnase, den der Punkt in maximaler Höhe der Skelettlinie hat. Sie wird angegeben durch diesen Abstand bezogen auf die Länge der Profilsehne.

Auch das Flügelprofil gemäss den obigen Angaben wurde aufgrund von aufwendigen Simulationen als optimal für Windverhältnisse in mittleren nördlichen Breiten ermittelt.

Bevorzugt weist auch das Leitelement den Querschnitt eines Flügelprofils auf, wobei dieses Flügelprofil bevorzugt ebenfalls bikonvex ausgebildet ist. Auch beim Leitelement verläuft die Profilsehne bevorzugt wenigstens annähernd parallel zur Längsachse.

Bevorzugt weis der Rotor einen Durchmesser von 2.5 m bis 6 m auf, insbesondere wenigstens annähernd 3 m.

Die Erfindung wird anhand eines in der Zeichnung dargestellten Ausführungsbeispiels näher beschrieben. Es zeigen rein schematisch:

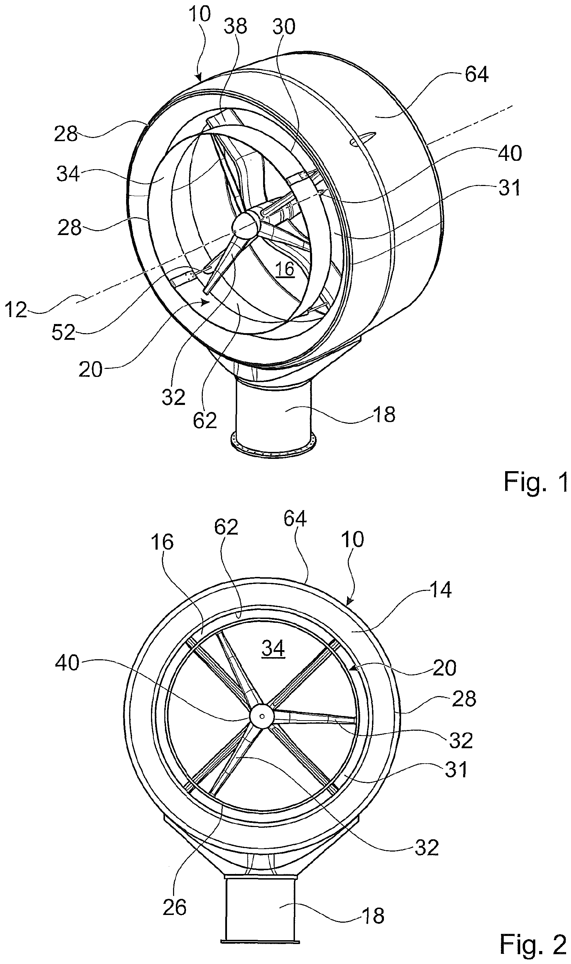

- Fig. 1: in perspektiver Darstellung eine als Mantelwindturbine ausgestaltete Strömungsenergieanlage;
- Fig. 2: die Mantelwindturbine gemäss Fig. 1 in Frontalansicht;

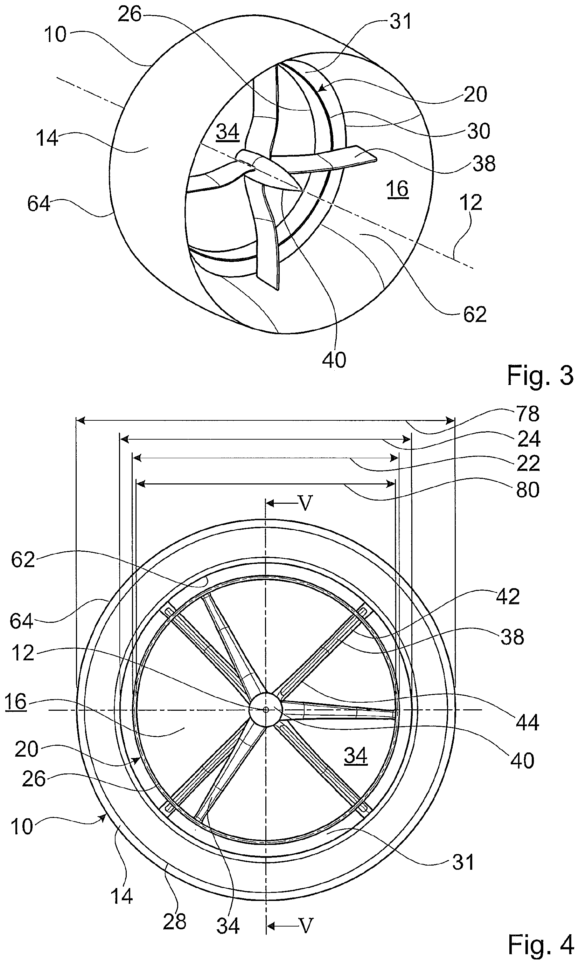

- Fig. 3: die stationären Teile der Mantelwindturbine gemäss Fig. 1 und 2 in einer perspektivischen Ansicht schräg von hinten;
- Fig. 4: eine Strichzeichnung der Mantelwindturbine gemäss Fig. 1 bis 3 in Frontalansicht;
- Fig. 5: die Mantelwindturbine gemäss den Fig. 1 bis 4 in einem Horizontalschnitt entsprechend der Schnittlinie V-V der Fig. 4; und
- Fig. 6: einen vergrösserten Ausschnitt der Fig. 5.

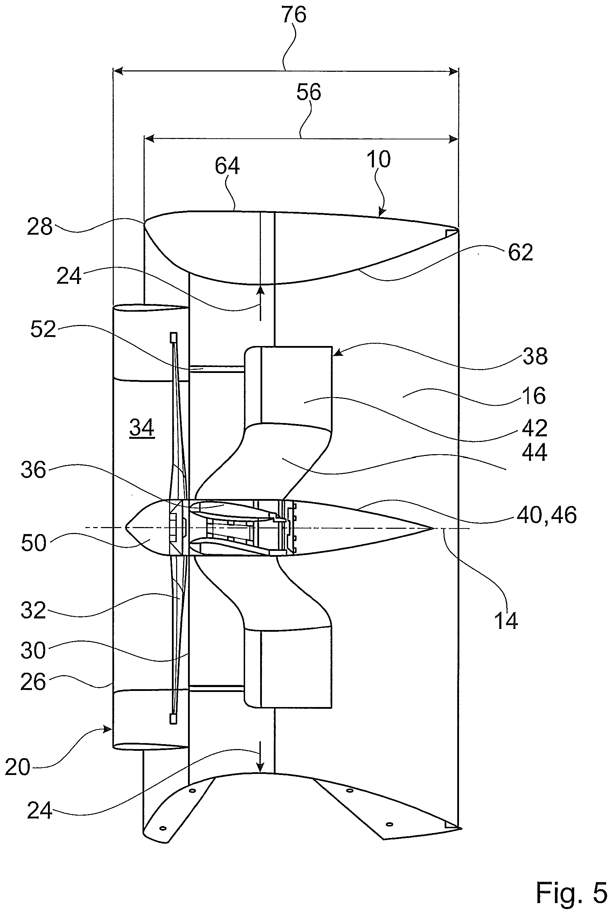

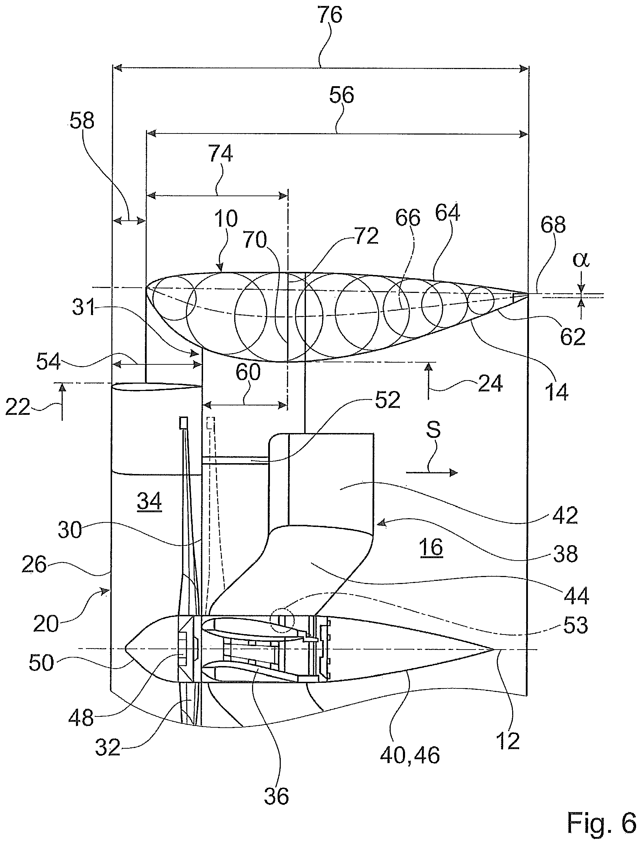

Die in den Figuren gezeigte Mantelwindturbine weist einen Mantel 10 auf, welcher eine Verkleidung der Mantelwindturbine bildet. Der Mantel 10 ist zur Längsachse 12 der Mantelwindturbine rotationssymmetrisch ausgebildet. Der Querschnitt des Mantels 10 bildet ein Flügelprofil 14, wie dies insbesondere aus den Fig. 5 und 6 erkennbar ist.

Die radial innen liegende Oberseite 62 des Flügelprofils und somit des Mantels 10 begrenzt einen Strömungskanal 16 für das die Mantelwindturbine antreibende Fluid, im vorliegenden Fall den Wind.

Der Mantel 10 ist von einem beispielsweise rohrförmigen Vertikalträger 18 abgestützt, welcher um die Vertikalachse drehbar ist, um die Mantelwindturbine optimal bezüglich der Windrichtung auszurichten.

Die Mantelwindturbine weist weiter ein Leitelement 20 auf, welches in sich geschlossen ringförmig und zur Längsachse 12 rotationssymmetrisch ausgebildet ist. Der grösste Aussendurchmesser 22 (Fig. 6) des Leitelements ist kleiner als die kleinste lichte Weite 24 des Strömungskanals 16.

Das stromaufwärts liegende Ende des Leitelements 20, die Leitelementprofilnase 26, ist bezüglich der Strömungsrichtung S stromaufwärts der Profilnase 28 des Mantels 10 angeordnet. Das stromabwärts liegende Ende des Leitelements 20, die Leitelementprofilhinterkante 30, befindet sich bezüglich der Profilnase 28 stromabwärts, jedoch bezüglich der kleinsten lichten Weite 24 stromaufwärts.

Der Mantel 10 und das Leitelement 20 begrenzen somit einen kreisringförmigen Mantelstromkanal 31 für den Wind.

Die Mantelwindturbine weist weiter einen, im gezeigten Ausführungsbeispiel drei blättrigen Propeller 32 auf, welcher um die Längsachse 12 drehbar gelagert ist. Der Propeller 32 befindet sich, in Strömungsrichtung S gesehen, in einem stromaufwärts liegenden Endbereich des Leitelements 20, welcher sich, von der Leitelementprofilhinterkante 30 her gemessen, über 20% der Länge des Leitelements 20 erstreckt. Bei der gezeigten Ausführungsform wird der Propeller 32 somit vom Hauptfluidstrom angeströmt, welcher den vom Leitelement gebildeten Hauptstromkanal 34 durchströmt.

Der Propeller 32 reicht in radialer Richtung bis auf einen konstruktiv möglichst kleinen Spalt bis zum Leitelement 20.

Der Propeller 32 treibt zur Erzeugung elektrischer Energie einen Generator 36 an.

Der Vollständigkeit halber sei erwähnt, dass sich der Propeller 32, in Richtung der Längsachse 12 gesehen, bei der Leitelementprofilhinterkante 30 oder bezüglich dieser stromabwärts befinden kann, wie dies in der Fig. 6 mit einem gestrichelt gezeigten Propeller angedeutet ist. Der Propeller 32 befindet sich jedoch auch bei dieser Ausführungsform benachbart zur Leitelementprofilhinterkante 30 und stromaufwärts der kleinsten lichten Weite 24 des Strömungskanals 16.

Vom Mantel 10 stehen, in radialer Richtung gegen innen, im gezeigten Ausführungsbeispiel vier Träger 38 ab. Sie haben den Querschnitt eines symmetrischen Flügelprofils und tragen mit ihrem radial innen liegenden Ende ein Generatorgehäuse 40. Dieses Generatorgehäuse 40 ist tropfenförmig und zur Längsachse 12 rotationssymmetrisch ausgebildet.

Die Träger 38 weisen einen rechtwinklig zur Längsachse 12 verlaufenden, geradlinigen Aussenabschnitt 42 auf, welcher sich vom Mantel 10 etwa bis zur Mitte zwischen dem Mantel 12 und dem Generatorgehäuse 40 erstreckt. Ein an den Aussenabschnitt 42 anschliessender Innenabschnitt 44 ist S-förmig gebogen. Er weist anschliessend an den Aussenabschnitt 42 eine erst Krümmung entgegen der Strömungsrichtung S und benachbart zum Generatorgehäuse 40 eine entgegengesetzte zweite Krümmung auf. Zwischen diesen Krümmungen verläuft der Innenabschnitt geradlinig, mit einem Winkel von etwa 45° zur Längsachse 12.

Die vier in einem Winkel von 45° zu Horizontalen beziehungsweise Vertikalen angeordneten, aufeinander zu verlaufenden Träger 38 tragen einen stationären Teil 46 des Generatorgehäuses 40, in welchem der Generator 36 und gegebenenfalls ein Getriebe angeordnet ist. Bezüglich dieses stationären Teils 36 steht entgegen der Strömungsrichtung S eine zur Längsachse 12 konzentrische Welle 48 ab, auf welcher der Propeller 32 sitzt. Ein stromaufwärtsseitiger Teil des Generatorgehäuses 40 ist durch eine Wellenhaube 50 gebildet, welche mit der Welle 48 und somit dem Propeller 32 mit dreht und zu optimalen Strömungsbedingungen beiträgt.

Der Vollständigkeit halber sei erwähnt, dass elektrische Leitungen vom Generator 36 durch mindestens einen der Träger 38 und von dort durch den Mantel zum Vertikalträger 18 verlaufen. Dies einerseits um die erzeugte elektrische Energie wegzuleiten und andererseits Steuerbeziehungsweise Sensorsignale zu beziehungsweise vom Generator wegzuführen.

Von jedem der Träger 38 steht vom Aussenabschnitt 42 entgegen der Strömungsrichtung S ein Elementträger 52 ab, welcher andernends mit der Leitelementprofilhinterkante 30 verbunden ist, um das stationäre Leitelement 20 zu tragen.

Es sei auch erwähnt, dass es möglich ist, die axiale Position des Propellers 32 einstellbar auszugestalten. So ist es möglich, ein vorzugsweise im Generatorgehäuse 40 angeordnetes Stellorgan 53 vorzusehen, um den Propeller 32 in seiner axialen Position zu verschieben, bevorzugt durch verschieben des Generatorgehäuses 40 bezüglich der Träger 38. In diesem Fall sind bevorzugt die Träger 38 bezüglich ihrer in der Zeichnung dargestellten Position stromabwärts versetzt angeordnet.

Im gezeigten Ausführungsbeispiel beträgt die in Richtung der Längsachse 12 gemessene Länge 54 des Leitelements 23% der Länge 56 des Mantels 10.

Der Aussendurchmesser des Leitelements 22 beträgt im gezeigten Ausführungsbeispiel 92% der kleinsten lichten Weite 24 des Strömungskanals 16.

In Richtung der Längsachse 12 gemessen, befindet sich die Leitelementprofilnase 26 bezüglich der Profilnase 28 des Mantels um 40% bezogen auf die Länge 56 des Mantels 10 stromaufwärts. Dieser Vorstand ist in Fig. 6 mit 58 bezeichnet.

Im gezeigten Ausführungsbeispiel beträgt der Abstand 60 zwischen dem Leitelement 20 und somit dessen Leitelementprofilhinterkante 30 und der kleinsten lichten Weite 24 des Strömungskanals 16 24% der Länge 56 des Mantels 10.

Der Vollständigkeit halber sei erwähnt, dass der Querschnitt des Leitelements 20 ebenfalls bikonvex, jedoch gestreckt ausgebildet ist. Mit andern Worten ist die radiale Dicke des Leitelements 20 bezüglich dessen Länge 54 gering.

Der Querschnitt des Mantels 10 ist bikonvex ausgebildet; folglich ist die den Strömungskanal 16 begrenzende Profiloberseite 62 als auch die radial aussenliegende Profilunterseite 64 konvex gebogen.

Die Skelettlinie 66 des Flügelprofils 14 des Mantels 10 verläuft bezüglich der Profilsehne 68 auf der der Längsachse 12 zugewandten, radial innen liegenden Seite. Das Flügelprofil 14 ist somit radial innen stärker gebogen als radial aussen.

Die Profilsehne 68 schliesst zwischen einer geradlinigen, stromabwärtsseitigen Verlängerung mit der Längsachse einen kleinen Winkel α von etwa 2° ein.

Die Profilwölbung 70 beträgt 0.07, die Profildicke 72 0.23 und die Wölbungsrücklage 74 0.37.

Im gezeigten Ausführungsbeispiel ist die Länge 76 der Mantelwindturbine um ca. 10% länger als die Länge 56 des Mantels 10.

Die Länge 76 der Mantelwindturbine kann beispielsweise 2.4 m und die Länge 56 des Mantels beispielsweise 2.2 m betragen. Entsprechend kann der Aussendurchmesser 78 des Mantels bei 4.4 m, der Aussendurchmesser des Leitelements bei 3.1 m und der Durchmesser des Rotors bei 3.0 m liegen. Die Mantelwindturbine kann jedoch bezüglich dieser Abmessung grösser oder kleiner ausgebildet werden.

## Patentansprüche

1. Strömungsenergieanlage, insbesondere Mantelwindturbine, mit einem eine Längsachse (12) definierenden, zur Längsachse (12) wenigstens annähernd rotationssymmetrischen, ringförmigen Mantel (10), welcher den Querschnitt eines Flügelprofils (14) aufweist und dessen radial innenliegende Oberseite (62) einen Strömungskanal (16) für ein Fluid begrenzt, einem zur Längsachse (12) wenigstens annähernd rotationssymmetrischen, ringförmigen Leitelement (20), dessen grösster Aussendurchmesser (22) kleiner ist als die kleinste lichte Weite (24) des Strömungskanals (16), und dessen Leitelementprofilnase (26) bezüglich der Profilnase (28) des Mantels (10), in Strömungsrichtung (S) des Fluids, stromaufwärts und dessen Leitelementprofilhinterkante (30) bezüglich der kleinsten lichten Weite (24) des Strömungskanals (16) stromaufwärts angeordnet ist, und einem im Strömungskanal (16) angeordneten, um die Längsachse (12) drehbaren, vom Fluid angeströmten Propeller (32) zum Antrieb eines elektrischen Generators (36), **dadurch gekennzeichnet, dass** die Leitelementprofilhinterkante (30) bezüglich der Profilnase (28) stromabwärts angeordnet ist und sich der Propeller (32), in Strömungsrichtung (S) gesehen, wenigstens annähernd bei der Leitelementprofilhinterkante (30)befindet.

2. Strömungsenergieanlage nach Anspruch 1, **dadurch gekennzeichnet, dass** vom Mantel (10), wenigstens annähernd in radialer Richtung gegen innen, Träger (38) abstehen, welche ein einen wenigstens annähernd tropfenförmigen, zur Längsachse (12) wenigstens annähernd rotationssymmetrischen Längsschnitt aufweisendes Generatorgehäuse (40) tragen, in welchen der Generator (36) und eine den Propeller (32) tragende Welle (48) angeordnet ist, und vorzugsweise die Träger (38) ein symmetrisches Flügelprofil aufweisen.

3. Strömungsenergieanlage nach Anspruch 2, **dadurch gekennzeichnet, dass** die Träger (38) einen wenigstens annähernd rechtwinklig zur Längsachse (12) verlaufenden, an den Mantel (10) anschliessenden, wenigstens annähernd geradlinigen Aussenabschnitt (42) und zwischen diesem und dem Generatorgehäuse (40) einen wenigstens annähernd S-förmig gebogenen Innenabschnitt (44) aufweisen.

4. Strömungsenergieanlage nach Anspruch 2 oder 3, **dadurch gekennzeichnet, dass** von den Trägern (38) entgegen der Strömungsrichtung (S) und wenigstens annähernd parallel zur Längsachse (12) verlaufende Elementträger (52) abstehen, welche das Leitelement (20) tragen.

5. Strömungsenergieanlage nach einem der Ansprüche 1 bis 4, **dadurch gekennzeichnet, dass**, in Richtung der Längsachse (12) gemessen, die Länge (54) des Leitelements (20) 15% bis 30%, insbesondere wenigstens annähernd 23% der Länge des Mantels (10) beträgt.

6. Strömungsenergieanlage nach einem der Ansprüche 1 bis 5, **dadurch gekennzeichnet, dass**, in Richtung der Längsachse (12) gemessen, das Leitelement (20) mit 30% bis 50%, insbesondere wenigstens annähernd 40%, seiner Länge (54) entgegen der Strömungsrichtung (S) über den Mantel (10) vorsteht.

7. Strömungsenergieanlage nach einem der Ansprüche 1 bis 6, **dadurch gekennzeichnet, dass** der Aussendurchmesser (78) des Leitelements (20) 85% bis 96%, insbesondere wenigstens annähernd 92% der kleinsten lichten Weite (24) des Strömungskanals (16) beträgt.

8. Strömungsenergieanlage nach einem der Ansprüche 1 bis 7, **dadurch gekennzeichnet, dass**, in Richtung der Längsachse (12) gemessen, der Abstand (60) zwischen dem Leitelement (20) und der kleinsten lichten Weite (24) des Strömungskanals (16) 20% bis 30%, insbesondere wenigstens annähernd 24% der Länge (56) des Mantels (10) beträgt.

9. Strömungsenergieanlage nach einem der Ansprüche 1 bis 8, **dadurch gekennzeichnet, dass** das Flügelprofil (14) des Mantels (10) bikonvex ausgebildet ist, wobei die Skelettlinie (66) bezüglich der Profilsehne (68) auf der der Längsachse (12) zugewandten Seite verläuft.

10. Strömungsenergieanlage nach Anspruch 9, **dadurch gekennzeichnet, dass** die Profilsehne (68) wenigstens annähernd parallel zur Längsachse (12) verläuft oder eine stromabwärtsseitige geradlinige Verlängerung der Profilsehne (68) und die Längsachse (12) einen spitzen Winkel (α) einschliessen, welcher vorzugsweise kleiner als 5⁰ ist.

11. Strömungsenergieanlage nach Anspruch 9 oder 10, **dadurch gekennzeichnet, dass** die Profilwölbung (70) 0.06 bis 0.08, insbesondere wenigstens annähernd 0.07 beträgt.

12. Strömungsenergieanlage nach einem der Ansprüche 9 bis 11, **dadurch gekennzeichnet, dass** die Profildicke (72) 0.19 bis 0.30, insbesondere wenigstens annähernd 0.23 beträgt.

13. Strömungsenergieanlage nach einem der Ansprüche 9 bis 12, **dadurch gekennzeichnet, dass** die Wölbungsrücklage (74) 0.3 bis 0.45, insbesondere wenigstens annähernd 0.37 beträgt.

14. Strömungsenergieanlage nach einem der Ansprüche 1 bis 12, **dadurch gekennzeichnet, dass** das Leitelement (20) den Querschnitt eines Flügelprofils aufweist.

15. Strömungsenergieanlage nach Anspruch 14, **dadurch gekennzeichnet, dass** der Querschnitt des Leitelements (20) bikonvex ausgebildet ist und die Profilsehne des Leitelements (20) wenigstens annähernd parallel zur Längsachse (12) verläuft.

16. Strömungsenergieanlage nach einem der Ansprüche 1 bis 15, **dadurch gekennzeichnet, dass** der Durchmesser des Propellers (32) wenigstens annähernd gleich gross ist wie die lichte Weite des Leitelements (20).

## Claims

1. A flow energy installation, in particular encased wind turbine, having an annular casing (10), which defines a longitudinal axis (12) and which is at least approximately rotationally symmetrical in relation to the longitudinal axis (12), and which has the cross-section of an airfoil profile (14), and the radially inner upper side (62) of which delimits a flow channel (16) for a fluid, having an annular guide element (20), which is at least approximately rotationally symmetrical in relation to the longitudinal axis (12), and the greatest external diameter (22) of which is less than the least inside width (24) of the flow channel (16), and the guide-element leading edge (26) of which is arranged upstream from the leading edge (28) of the casing (10) in the direction of flow (S) of the fluid, and the guide-element trailing edge (30) of which is arranged upstream from the least inside width (24) of the flow channel (16), and having a propeller (32), which is arranged in the flow channel (16), is rotatable about the longitudinal axis (12) and is impinged on by the fluid, for the purpose of driving an electrical generator (36), **characterized in that** the guide-element trailing edge (30) is arranged downstream from the leading edge (28) and the propeller (32), as viewed in the direction of flow (S), is located at least approximately at the guide-element trailing edge (30).

2. The flow energy installation as claimed in claim 1, **characterized in that**, projecting inwardly from the casing (10), at least approximately in the radial direction, there are supports (38), which support a generator housing (40), which has an at least approximately drop-shaped longitudinal section that is at least approximately rotationally symmetrical in relation to the longitudinal axis (12), and in which are arranged the generator (36) and a shaft (48) that carries the propeller (32), and the supports (38) preferably have a symmetrical airfoil profile.

3. The flow energy installation as claimed in claim 2, **characterized in that** the supports (38) have an at least approximately straight outer portion (42) that runs at least approximately at right angles to the longitudinal axis (12) and adjoins the casing (10), and between this outer portion and the generator housing (40) they have an inner portion (44) bent at least approximately in an S shape.

4. The flow energy installation as claimed in claim 2 or 3, **characterized in that**, projecting from the supports (38), contrary to the direction of flow (S) and at least approximately parallel to the longitudinal axis (12), are element supports (52) that support the guide element (20).

5. The flow energy installation as claimed in any one of claims 1 to 4, **characterized in that**, measured in the direction of the longitudinal axis (12), the length (54) of the guide element (20) is 15% to 30%, in particular at least approximately 23%, of the length of the casing (10).

6. The flow energy installation as claimed in any one of claims 1 to 5, **characterized in that**, measured in the direction of the longitudinal axis (12), the guide element (20) projects by 30% to 50%, in particular at least approximately 40%, of its length (54), contrary to the direction of flow (S), over the casing (10).

7. The flow energy installation as claimed in any one of claims 1 to 6, **characterized in that** the external diameter (78) of the guide element (20) is 85% to 96%, in particular at least approximately 92%, of the least inside width (24) of the flow channel (16).

8. The flow energy installation as claimed in any one of claims 1 to 7, **characterized in that**, measured in the direction of the longitudinal axis (12), the distance (60) between the guide element (20) and the least inside width (24) of the flow channel (16) represents 20% to 30%, in particular at least approximately 24%, of the length (56) of the casing (10).

9. The flow energy installation as claimed in any one of claims 1 to 8, **characterized in that** the airfoil profile (14) of the casing (10) is biconvex, wherein the camber line (66) runs, with respect to the chord line (68), on the side that faces toward the longitudinal axis (12).

10. The flow energy installation as claimed in claim 9, **characterized in that** the chord line (68) is at least approximately parallel to the longitudinal axis (12), or a downstream straight extension of the chord line (68) and the longitudinal axis (12) enclose an acute angle (α) that is preferably less than 5°.

11. The flow energy installation as claimed in claim 9 or 10, **characterized in that** the camber (70) is 0.06 to 0.08, in particular at least approximately 0.07.

12. The flow energy installation as claimed in any one of claims 9 to 11, **characterized in that** the profile thickness (72) is 0.19 to 0.30, in particular at least approximately 0.23.

13. The flow energy installation as claimed in any one of claims 9 to 12, **characterized in that** the position of maximum camber (74) is 0.3 to 0.45, in particular at least approximately 0.37.

14. The flow energy installation as claimed in any one of claims 1 to 12, **characterized in that** the guide element (20) has the cross-section of an airfoil.

15. The flow energy installation as claimed in claim 14, **characterized in that** the cross-section of the guide element (20) is biconvex, and the chord line of the guide element (20) is at least approximately parallel to the longitudinal axis (12).

16. The flow energy installation as claimed in any one of claims 1 to 15, **characterized in that** the diameter of the propeller (32) is at least approximately as great as the inside width of the guide element (20).

## Revendications

1. Installation à énergie d'écoulement, en particulier une turbine éolienne à gaine, avec une gaine annulaire (10), qui définit un axe longitudinal (12) et qui est au moins approximativement symétrique en rotation par rapport à l'axe longitudinal (12), et qui présente la section transversale d'un profil aérodynamique (14), et dont la face supérieure (62) radialement intérieure délimite un canal d'écoulement (16) pour un fluide, avec un élément de guidage (20) annulaire, au moins approximativement symétrique en rotation par rapport à l'axe longitudinal (12), dont le plus grand diamètre extérieur (22) est inférieur à la plus petite largeur intérieure (24) du canal d'écoulement (16), et dont le bord d'attaque (26) de l'élément de guidage est disposé en amont du bord d'attaque (28) de la gaine (10) dans la direction d'écoulement (S) du fluide, et dont le bord de fuite (30) de l'élément de guidage est disposé en amont de la plus petite largeur intérieure (24) du canal d'écoulement (16), et avec une hélice (32) qui est disposée dans le canal d'écoulement (16), le bord de fuite (30) de l'élément de guidage est disposé en aval du bord d'attaque (28) et l'hélice (32), vue dans la direction d'écoulement (S), se trouve au moins approximativement sur le bord de fuite (30) de l'élément de guidage.

2. Installation à énergie d'écoulement selon la revendication 1, **caractérisée en ce que** des supports (38) font saillie vers l'intérieur de la gaine (10) au moins approximativement dans la direction radiale, lesquels supportent un boîtier de générateur (40) qui présente une section longitudinale au moins approximativement en forme de goutte et au moins approximativement symétrique en rotation par rapport à l'axe longitudinal (12) et dans lequel sont disposés le générateur (36) et un arbre (48) portant l'hélice (32), et les supports (38) présentent de préférence un profil aérodynamique symétrique.

3. Installation à énergie d'écoulement selon la revendication 2, **caractérisée en ce que** les supports (38) présentent une partie extérieure (42) au moins approximativement droite, s'étendant au moins approximativement perpendiculairement à l'axe longitudinal (12) et se raccordant à la gaine (10), et présentent entre cette partie extérieure et le boîtier de générateur (40) une partie intérieure (44) pliée au moins approximativement en forme de S.

4. Installation à énergie d'écoulement selon la revendication 2 ou 3, **caractérisée en ce que**, en saillie des supports (38), à l'opposé de la direction d'écoulement (S) et au moins approximativement parallèlement à l'axe longitudinal (12), se trouvent des supports d'éléments (52) qui supportent l'élément de guidage (20).

5. Installation à énergie d'écoulement selon l'une quelconque des revendications 1 à 4, **caractérisée en ce que**, mesurée dans la direction de l'axe longitudinal (12), la longueur (54) de l'élément de guidage (20) représente 15% à 30%, notamment au moins environ 23%, de la longueur de la gaine (10) .

6. Installation à énergie d'écoulement selon l'une quelconque des revendications 1 à 5, **caractérisée en ce que**, mesuré dans la direction de l'axe longitudinal (12), l'élément de guidage (20) fait saillie de 30% à 50%, notamment d'au moins environ 40%, de sa longueur (54), dans le sens contraire de la direction d'écoulement (S), sur la gaine (10).

7. Installation à énergie d'écoulement selon l'une quelconque des revendications 1 à 6, **caractérisée en ce que** le diamètre extérieur (78) de l'élément de guidage (20) représente 85% à 96%, notamment au moins environ 92%, de la plus petite largeur intérieure (24) du canal d'écoulement (16).

8. Installation à énergie d'écoulement selon l'une quelconque des revendications 1 à 7, **caractérisée en ce que**, mesurée dans la direction de l'axe longitudinal (12), la distance (60) entre l'élément de guidage (20) et la plus petite largeur intérieure (24) du canal d'écoulement (16) représente 20% à 30%, notamment au moins environ 24%, de la longueur (56) de la gaine (10) .

9. Installation à énergie d'écoulement selon l'une quelconque des revendications 1 à 8, **caractérisée en ce que** le profil aérodynamique (14) de la gaine (10) est biconvexe, la ligne de cambrure (66) s'étendant, par rapport à la ligne de corde (68), sur le côté tourné vers l'axe longitudinal (12) .

10. Installation à énergie d'écoulement selon la revendication 9, **caractérisée en ce que** la ligne de corde (68) est au moins approximativement parallèle à l'axe longitudinal (12), ou un prolongement rectiligne aval de la ligne de corde (68) et l'axe longitudinal (12) forment un angle aigu (α) qui est de préférence inférieur à 5°.

11. Installation à énergie d'écoulement selon la revendication 9 ou 10, **caractérisée en ce que** la cambrure (70) est comprise entre 0,06 et 0,08, notamment au moins approximativement 0,07.

12. Installation à énergie de flux selon l'une quelconque des revendications 9 à 11, **caractérisée en ce que** l'épaisseur du profil (72) est comprise entre 0,19 et 0,30, notamment au moins approximativement 0,23.

13. Installation à énergie de flux selon l'une quelconque des revendications 9 à 12, **caractérisée en ce que** la position de cambrure maximale (74) est de 0,3 à 0,45, notamment au moins environ 0,37.

14. Installation d'énergie d'écoulement selon l'une quelconque des revendications 1 à 12, **caractérisée en ce que** l'élément de guidage (20) présente la section transversale d'un profil aérodynamique.

15. Installation d'énergie de flux selon la revendication 14, **caractérisée en ce que** la section transversale de l'élément de guidage (20) est biconvexe, et la ligne de corde de l'élément de guidage (20) est au moins approximativement parallèle à l'axe longitudinal (12).

16. Installation d'énergie d'écoulement selon l'une quelconque des revendications 1 à 15, **caractérisée en ce que** le diamètre de l'hélice (32) est au moins approximativement aussi grand que la largeur intérieure de l'élément de guidage (20) .
